# EUROPEAN PATENT SPECIFICATION

(11) **EP 1 705 103 B1**
(45) Date of publication and mention of the grant of the patent: **26.11.2008**
(21) Application number: 06003931.0
(22) Date of filing: 27.02.2006
(51) Int. Cl.: B62D 25/00, B62D 21/15, B60J 7/10

(54) **Vehicle panel**
Plattenelement für ein Fahrzeug
Panneau de véhicule

(30) Priority: 24.03.2005 JP 2005085205; 24.03.2005 JP 2005085206; 24.03.2005 JP 2005085207
(43) Date of publication of application: 27.09.2006
(73) Proprietor: Mazda Motor Corporation, Aki-gun, Hiroshima 730-8670 (JP)
(72) Inventor: Shigyo, Yasuyuki, Aki-gun Hiroshima 730-8670 (JP); Nakayama, Nobuyuki, Aki-gun Hiroshima 730-8670 (JP)
(74) Representative: Zinnecker, Armin

(56) References cited:
- DE-A1- 4 208 408
- DE-A1- 10 056 796
- GB-A- 1 292 011
- US-A- 6 135 535

## Description

### BACKGROUND OF THE INVENTION

### Field of the Invention

The present invention relates to a vehicle panel as a component of a vehicle body such as a hard roof, a lift gate or a rear gate. In particular, the present invention relates to a panel including a panel body prepared by bonding an outer panel and an inner panel and a linear reinforcement arranged between the outer and inner panels.

### Description of Related Art

As an example of a vehicle panel, Japanese Unexamined Patent Publication No. 10-297286 discloses a hard roof for convertibles which is detachable from a vehicle body.

Another example of the vehicle panel is a back door structure disclosed by Japanese Examined Utility Model Publication No. 05-34970 Y2. The back door includes an outer panel and an inner panel which are bonded together and a wire provided between the outer and inner panels. The wire prevents the back door from falling off the vehicle body. One end of the wire is fixed to a hinge connecting the back door and the vehicle body and the other end is fixed to the inner panel, while the other part of the wire between the fixed ends is kept loosened.

The hard roof or the back door described above is made of resin. Therefore, when a load is applied in a collision to a vehicle provided with the hard roof or the back door, the hard roof or the back door is disassembled by the large load.

Further, as to the panel disclosed by the latter publication, the wire arranged in the panel is kept loosened. Therefore, the wire may hit the inner panel and/or the outer panel while the car is driven, thereby making noise.

DE 100 56 796 A1 discloses a vehicle panel according to the preamble part of claim 1.

An object of the present invention is to prevent a vehicle panel from being disassembled and scattered even when the vehicle panel is broken under a large load applied in a collision.

The present invention is directed to a vehicle panel including: a panel prepared by bonding an outer panel and an inner panel; and a linear reinforcement in the form of a wire arranged between the outer panel and the inner panel.

The outer panel or the inner panel includes two or more fixing parts for fixing the linear reinforcement and at least one projection provided between the fixing parts. The linear reinforcement is supported by the projection between the fixing parts to be spaced from the outer and inner panels while tension is applied to the linear reinforcement.

The linear reinforcement is a wire.

By arranging the linear reinforcement within the panel, the panel is prevented from being disassembled and scattered even when the panel is broken by a large load applied in a collision. Since the linear reinforcement is stretched and spaced from the panels, the linear reinforcement does not hit the inner panel and/or the outer panel even if the linear reinforcement vibrates when the car is running.

The panel may include two or more mounting parts and may be detachably attached to a vehicle body with the mounting parts. The linear reinforcement may connect the mounting parts together.

By connecting the mounting parts with the linear reinforcement, a load transferred from the vehicle body to one of the mounting parts is dispersed to the other mounting parts. Further, if a portion of the panel close to one of the mounting parts is broken, the panel is prevented from being scattered because the mounting part is connected to the other mounting parts by the linear reinforcement.

The linear reinforcement may connect the mounting parts which are arranged at both ends of the panel in the vehicle width direction. By so doing, when a load is applied to any of the left and right mounting parts in a side or offset collision, the load is dispersed effectively.

The linear reinforcement may connect the mounting parts which are arranged to be spaced from each other in the longitudinal direction of the vehicle body. By so doing, when a load is applied to any of the front and rear mounting parts in a frontal or rear collision, the load is dispersed effectively.

The linear reinforcement may connect the mounting parts which are arranged at different heights. By so doing, when a large load is applied to any of the upper and lower mounting parts in a collision, the load is dispersed effectively.

The linear reinforcement may connect the mounting parts via plate-like reinforcements. With use of the plate-like reinforcements, the mounting parts are attached to the panel with improved firmness. Further, the linear reinforcement and the mounting parts are connected more easily in the manufacture of the panel.

The linear reinforcement may be arranged along almost the entire circumference of the panel.

According to the structure, a load applied to the vehicle body in any of frontal, side, rear and offset collisions is dispersed effectively. Further, the panel is prevented from being scattered.

The linear reinforcement may include an upper linear reinforcement and a lower linear reinforcement. With use of the twin linear reinforcement, the panel improves in resistance against the impact load.

The linear reinforcement may substantially be in the form of a closed loop and arranged along at least part of the circumference of the panel.

According to the structure, the panel is prevented from being disassembled and scattered even if an impact load is applied to the panel from any direction.

The linear reinforcement may be divided into two or more line segments and both ends of each of the line segments may be fixed by the fixing parts.

By so doing, the number of the fixing parts increases and the load applied to the panel is dispersed more easily. As a result, the panel improves in resistance against the impact load.

The line segments may include upper line segments and lower line segments.

As each of the line segments includes twinned upper and lower line segments, the panel further improves in resistance against the impact load.

The line segments may be connected together via the plate-like reinforcements attached to the outer panel or the inner panel.

When the line segments are securely connected together via the plate-like reinforcements, the line segments are attached with improved firmness. This brings about an improvement in load transfer among the line segments.

The projection may be provided with a recess for supporting the linear reinforcement.

As the linear reinforcement is supported by the recess, the linear reinforcement is surely prevented from coming off the projection even when it vibrates while the car is running. In particular, if the panel is manufactured by arranging the linear reinforcement and then bonding the inner panel and the outer panel undetachably, it is extremely important that the linear reinforcement does not come off the projection.

The direction of extension of the linear reinforcement may be changed by the recess.

By so doing, the linear reinforcement is hooked on the recess more favorably. Even if the panel is curved three-dimensionally, the linear reinforcement is arranged along the curve. Thus, the degree of freedom in arranging the linear reinforcement improves.

It may be possible that the linear reinforcement includes an upper linear reinforcement and a lower linear reinforcement, the projection is provided with two recesses corresponding to the upper and lower linear reinforcements and the upper and lower reinforcements are arranged such that parts thereof between the projection and the fixing part are not parallel to each other.

By arranging the upper and lower linear reinforcements between the fixing parts, the resistance of the panel improves. Further, as the two linear reinforcements are arranged such that parts thereof between the projection and the fixing part are not parallel to each other, the direction of extension of the linear reinforcements is changed three-dimensionally corresponding to the shape of the panel. Moreover, the linear reinforcements are suitably engaged with the recesses, thereby preventing the linear reinforcements from coming off with higher reliability.

The projection may be arranged near an opening formed in the outer panel or the inner panel. Accordingly, the opening is reinforced with the projection for supporting the linear reinforcement. The opening may be the one for attaching a trim for covering the cabin side of the inner panel.

The panel may be a roof detachable from the vehicle body.

Although the roof of a vehicle is likely to receive a load in a frontal, side, rear or offset collision, the roof provided with the linear reinforcement is prevented from being disassembled or scattered in the collision. That is, the panel of the present invention is suitable for a hard roof (detachable hardtop).

### BRIEF DESCRIPTION OF THE DRAWINGS

FIG. **1** is an oblique view illustrating a vehicle including a panel of the present invention.
FIG. **2** is a plan view of an inner panel.
FIG. **3** is a sectional view taken along the line III-III of FIG. **2****.**
FIG. **4** is an enlargement of a major part of FIG. **3****.**
FIG. **5** is a sectional view taken along the line V-V of FIG. **2****.**
FIG. **6** is a sectional view taken along the line VI-VI of FIG. **2****.**
FIG. **7** is a view illustrating a striker attached to a vehicle body.
FIG. **8** is a sectional view taken along the line VIII-VIII of FIG. **2****.**
FIG. **9** is an oblique view illustrating a wire arrangement.
FIG. **10** is an oblique view illustrating the wire arrangement.
FIG. **11** is a side view illustrating the wire arrangement.
FIG. **12** is an enlargement of a major part of FIG. **10****.**
FIG. **13** is a plan view illustrating the wire arrangement.
FIG. **14** is a sectional view illustrating a relationship between the wire and a wire mounting part.
FIG. **15** is a view illustrating a rib.
FIG. **16** is a sectional view taken along the line XVI-XVI of FIG. 11.
FIG. **17** is a view illustrating a rib.
FIG. **18** is a view illustrating another example of the rib.

### PREFERRED EMBODIMENTS OF THE INVENTION

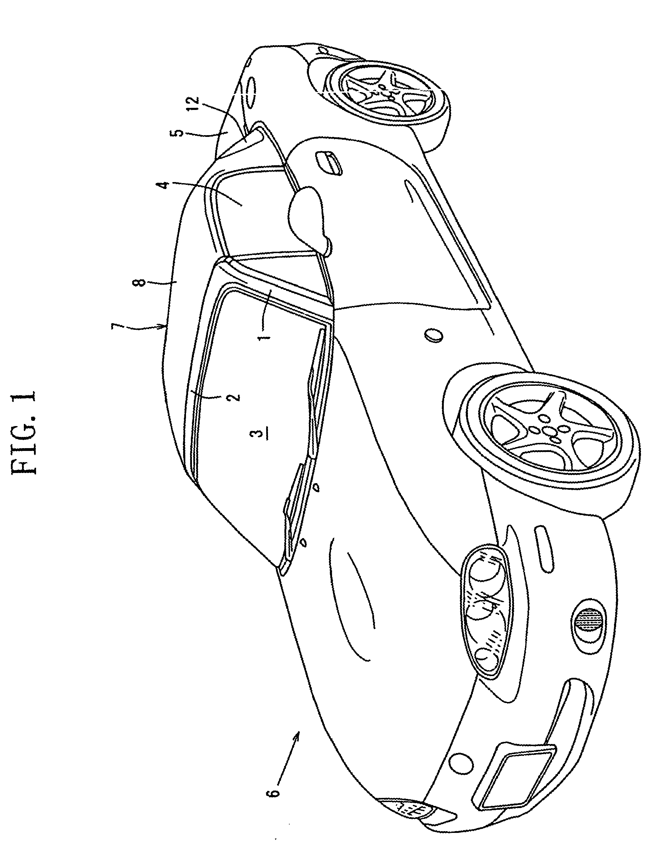

FIG. **1** illustrates a convertible **6** to which the panel of the present invention is applied. The convertible **6** includes a front windshield **3** surrounded by left and right front pillars **1** and a front header **2,** up-and-down side windows **4** and a rear deck **5.** Further, a hard roof **7** (detachable hardtop) storing therein an open/close hood (not shown) is attached to the convertible **6.**

The hard roof **7** includes an outer panel **8** which forms part of the outer surface of the vehicle and an inner panel **9** integrally bonded to the cabin side of the outer panel **8.** The panels **8** and **9** are made of resin such as a seat molding compound (SMC).

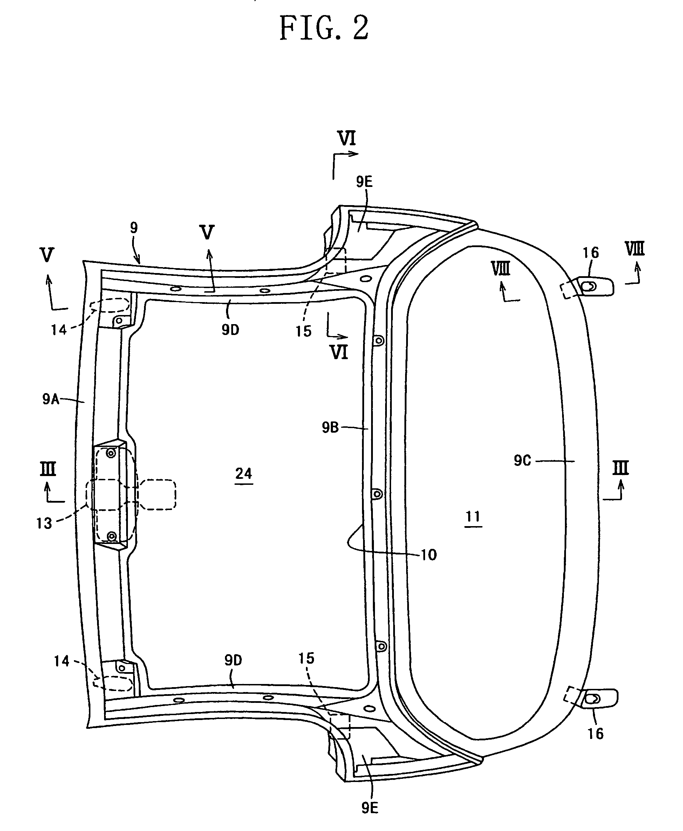

As shown in FIGS. **2** and **9** to **11,** the inner panel **9** includes a front side part **9A** extending in the vehicle width direction, a rear side part **9B** extending in the vehicle direction at a position more rearward than the front side part **9A,** a bottom side part **9C** extending in the vehicle width direction at a position more rearward than the rear side part **9B,** flank side parts **9D** extending in the longitudinal direction of the vehicle body to connect the ends of the side part **9A** and the ends of the side parts **9B** and vertical side parts **9E** extending in the vertical direction to connect the ends of the side parts **9B** and 9D with the front ends of the side **9C.** Thus, the inner panel **9** includes the integral side parts **9A to 9E.**

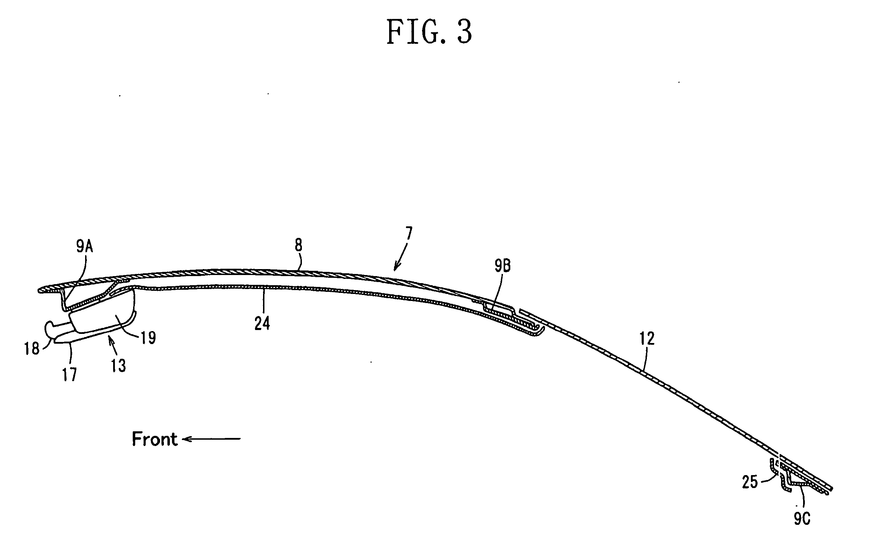

The inner panel **9** further includes an opening **10** defined by the front side part **9A,** rear side part **9B** and left and right flank side parts **9D** and an opening **11** defined by the rear side part **9B,** bottom side part **9C** and the left and right vertical side parts **9E.** The opening **10** is provided for weight reduction. A rear windshield **12** is attached to the rim of the opening **11** (see FIG. **3****).**

The hard roof 7 is detachably attached to the vehicle body with use of a top lock **13,** wedges **14,** side locks **15,** and rear deck locks **16.**

As shown in FIGS. **2** to **4****,** the top lock **13** is attached to the middle of the front side part **9A** in the vehicle width direction. The top lock **13** includes a hook **18,** a cover **19** and a base **20.** The hook **18** is detachably engaged with an engagement pin (not shown) attached to the front header **2** by the operation of a lever **17.** Details of the top lock **13** are disclosed by Japanese Examined Utility Model Publication No. 07-28023.

The base **20** is attached to the front side part **9A** with bolts **21** and nuts **22.** A steel reinforcement **23** is bonded in advance to the middle of the upper surface of the front side part **9A.** The base **20,** front side part **9A** and reinforcement **23** are fastened together with the above-described bolts **21** and nuts **22.**

Referring to FIG. **3****,** a trim **24** (top ceiling) covers the opening **10** from the cabin side and a trim **25** (rear trim) covers the bottom side part **9C** of the inner panel **9** from the cabin side.

The wedges **14** are attached to both ends of the front side part **9A** from the bottom surface, respectively. Each of the wedges **14** includes two positioning pins **26** and **27** and a wedged tip **29** covered with a rubber piece **28.** Each of the wedges **14** properly positioned by the positioning pins **26** and **27** is attached to the front side part **9A** with bolts **30** and nuts **31.** Steel reinforcements **32** are bonded in advance to both ends of the front side part **9A** from the top surface, respectively. Each of the wedges **14** is fastened together with the front side part **9A** and the reinforcement **32** with the bolts **30** and the nuts **31.**

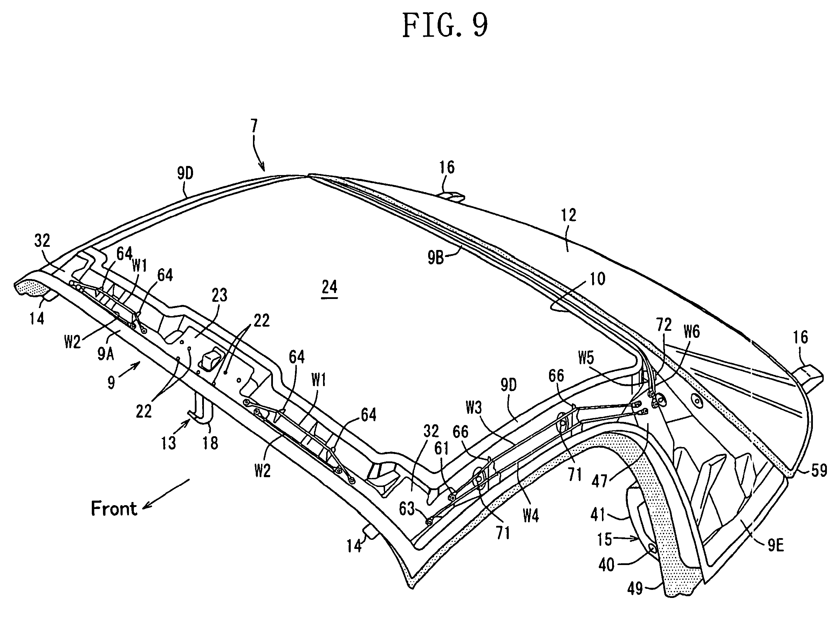

As shown in FIG. **9****,** the reinforcements **32** are arranged at the corners formed by the front side part **9A** and the flank side parts **9D** to contact both of the side parts **9A** and **9D.**

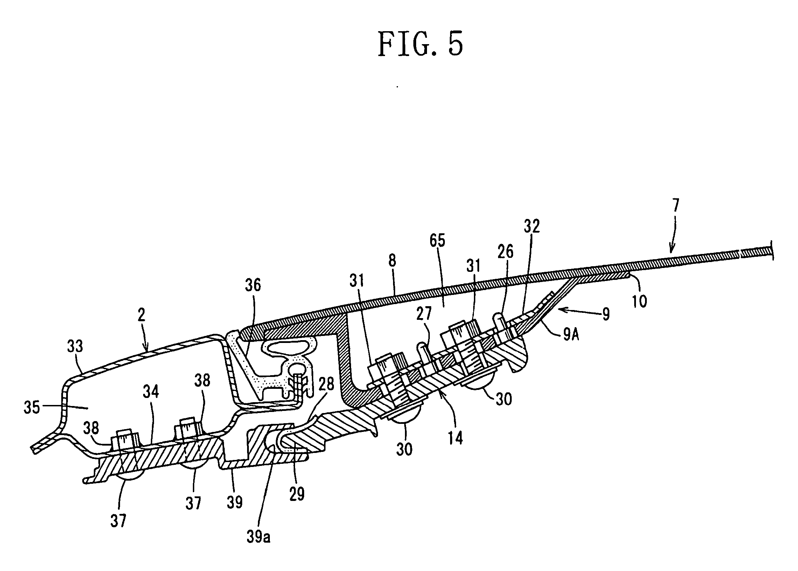

As shown in FIG. **5****,** the front header **2** includes a header outer panel **33** and a header inner panel **34** which are bonded together to provide therebetween closed header space **35** extending in the vehicle width direction. A sealing member **36** is attached to a bonding flange of the front header **2.** Supports **39** are fixed to the header inner panel **34** with bolts **37** and nuts **38** to receive the wedges **14,** respectively. Each of the supports **39** has a recess **39a** for receiving the wedged tip **29** of the wedge **14,** thereby positioning the hard roof 7 at two side parts with respect to the vehicle body.

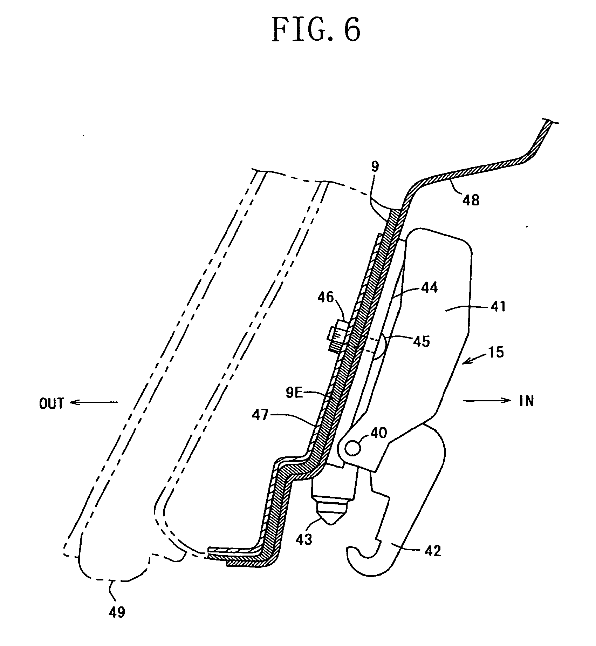

The side locks **15** are attached to the vertical side parts **9E,** respectively, as shown in FIGS. **2** and **6****.** Each of the side locks **15** includes a hook **42,** a tapered positioning pin **43** and a base **44.** The hook **42** is locked/unlocked by a handle **41** which rotates around a pivot **40.** The base **44** is attached to the vertical side part **9E** with two or more bolts **45** and two or more nuts **46** (in FIG. **6****,** only a single bolt and nut pair is shown). Steel reinforcements **47** are bonded in advance to the outer surface of the vertical side parts **9E,** respectively. The base **44,** vertical side part **9E** and the reinforcement **47** are fastened together with the bolts **45** and the nuts **46.**

Each of the reinforcements **47** extends upward as shown in FIG. **9** such that the top thereof approaches the corner formed by the side parts **9D, 9B** and **9E.**

Referring to FIG. **6****,** a trim **48** covers the vertical side part **9E** of the inner panel **9** from the cabin side. The trim **48** may be integral with the trim **24** shown in FIG. **3****.** Reference numeral **49** indicates a weatherstrip.

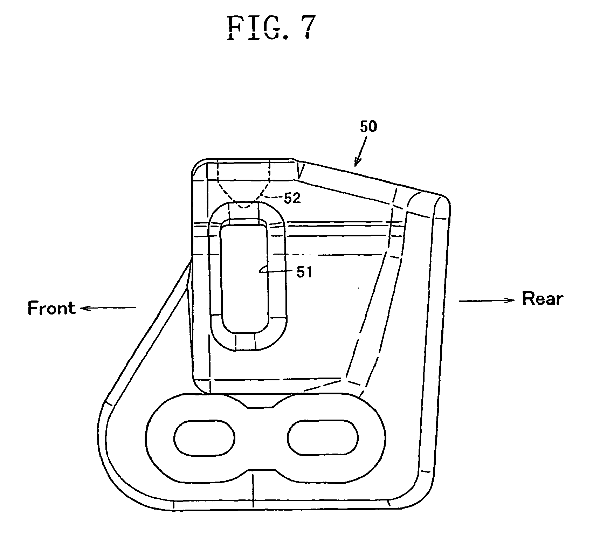

To the vehicle body, strikers **50** corresponding to the side locks 15 are fixed. Each of the strikers **50** includes a hook hole **51** and a tapered hole **52** as shown in FIG. 7. When the tapered pin **43** of the side lock **15** is inserted into the tapered hole **52** and the hook **42** is engaged with the hook hole **51,** the bottom side parts of the hard roof **7** are engaged with the center pillar of the vehicle body.

The rear deck locks **16** are attached to the bottom side part **9C** to be spaced from each other in the vehicle width direction. Each of the rear deck locks **16** includes a base plate **54** having an opening **53,** a lock plate **56** fixed to the rear part of the base plate **54** from above with a spacer **55** sandwiched therebetween and a cover **57.** A front portion of the base plate **54** is inserted into the bottom side part **9C** of the inner panel **9.**

The rear deck **5** has engagement pins **58** (lock pins) each having a head **58a.** In order to engage the rear deck locks **16** with the engagement pins **58,** respectively, the engagement pins **58** are inserted into the openings **53** of the rear deck locks **16** and the rear deck locks **16** are shifted forward with the engagement pins **58** and the heads **58a** kept protruding upward from the openings **53.** By so doing, the engagement pins **58** are engaged with the lock plates **56.** Thus, the left and right sides of the rear part of the hard roof 7 are engaged with the vehicle body.

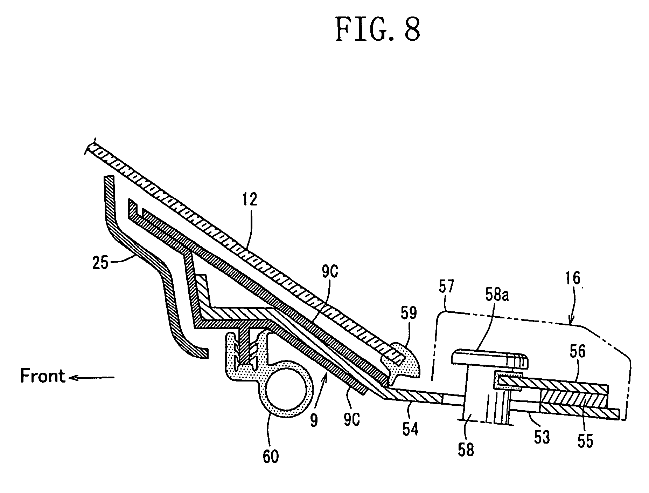

Referring to FIG. **8****,** a sealing member **59** is provided around the circumference of the rear windshield **12** and a weatherstrip **60** is attached to a projection extending from a bottom side part **9C** of the inner panel **9.**

In the hard roof **7,** a linear reinforcement **W** is arranged between the outer and inner panels **8** and **9.** FIGS. **9** to **13** illustrate the arrangement of the linear reinforcement **W.** The linear reinforcement **W** is arranged along at least part of the circumference of the inner panel **9,** i.e., along the front side part **9A,** flank side parts **9D** and rear side part 9B to be substantially in the form of a closed loop.

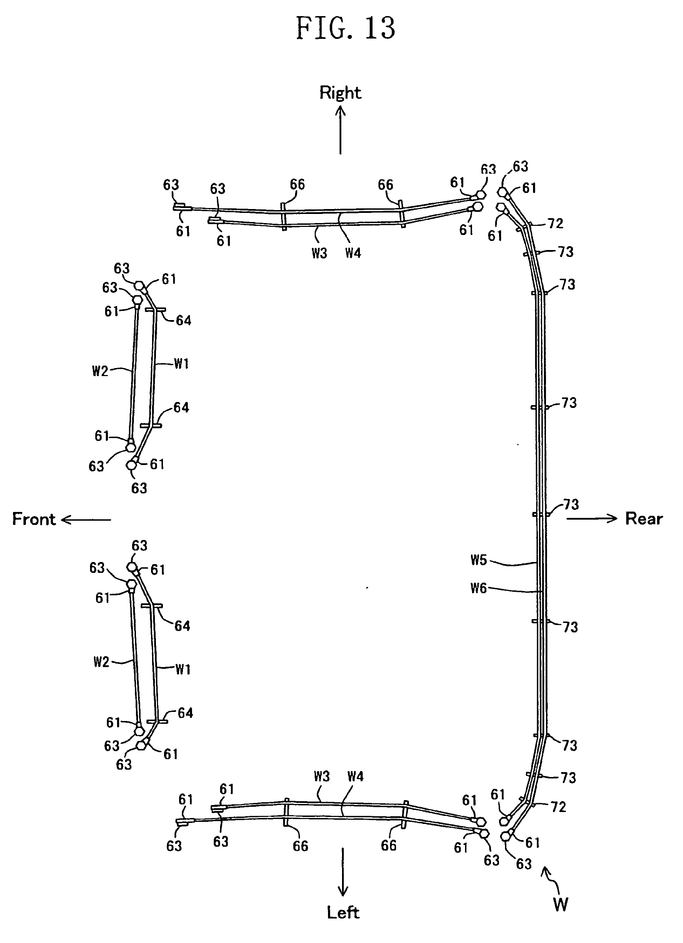

FIG. **13** is a plan view illustrating the extraction of the linear reinforcement **W.** The linear reinforcement **W** includes discontinuous 10 line segments (wires W1to **W6).** The wires **W1, W3** and **W5** are arranged more upward than the wires **W2, W4** and **W6.**

As clearly observed in FIG. **13****,** the arrangement of the wires **W1** to **W6** is left-right symmetric when viewed in plan.

Each of the wires **W1** to **W6** has wire brackets **61** at both ends thereof. Each of the wire brackets **61** is formed by casting with the wire end placed in a casting mold. The wire brackets **61** have mounting holes **62,** respectively.

The wire brackets **61** of the wires **W1** to **W6** are fixed to the reinforcements **23, 32** and 47 with bolt and nut pairs **63.**

As shown in FIG. **9****,** the wires **W1** and **W2** are arranged along the front side part **9A** of the inner panel **9** between the reinforcements **23** and **32** while ones of the ends thereof are fixed to the reinforcements **23** and the others are fixed to the reinforcements **32.**

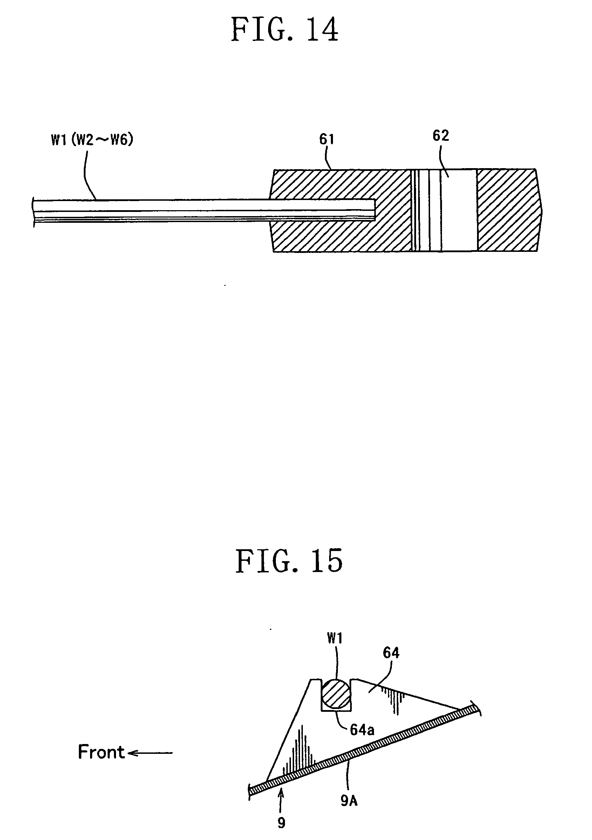

The wires **W2** located below the wires **W1** extend linearly along the front side part **9A** of the inner panel **9** between the reinforcements **23** and **32.** The middle portions of the wires **W1** located above the wires **W2** are hooked on recesses **64a** of ribs **64** (see FIG. **15****)** which are integral with the inner panel **9** and positioned close to the reinforcements **23** and **32.** As a result, interference between the upper wires **W1** and the lower wires **W2** is prevented.

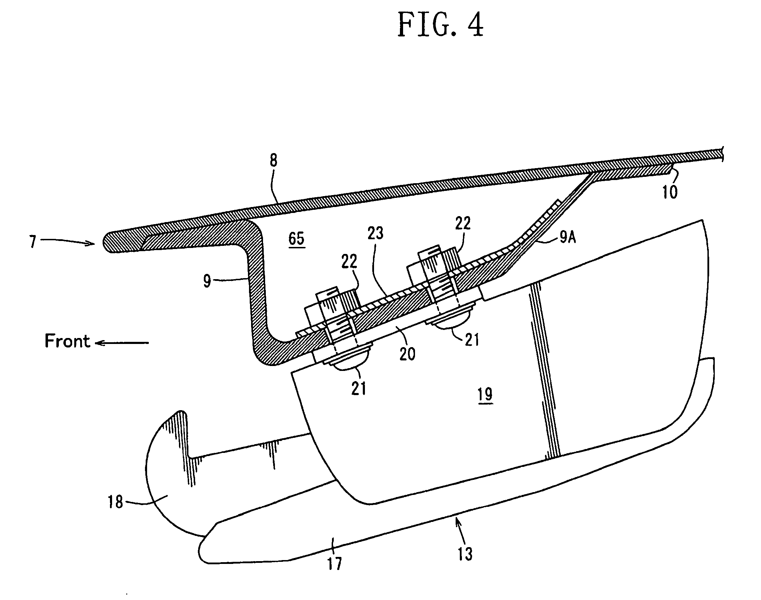

The upper and lower wires **W1** and **W2** are placed in space **65** formed between the outer and inner panels **8** and **9** (see FIGS. **4** and **5****).** In order to prevent unusual sounds from occurring, other parts of the wires **W1** and **W2** than the fixed ends are free from contact with the panels **8** and **9** with a possible tension applied thereto.

As shown in FIGS. **9** to **12****,** the wires **W3** and **W4** are arranged along the flank side parts **9A** of the inner panel **9** between the reinforcements **32** and **47** while ones of the ends thereof are fixed to the reinforcements **32** and the others are fixed to the reinforcements **47.**

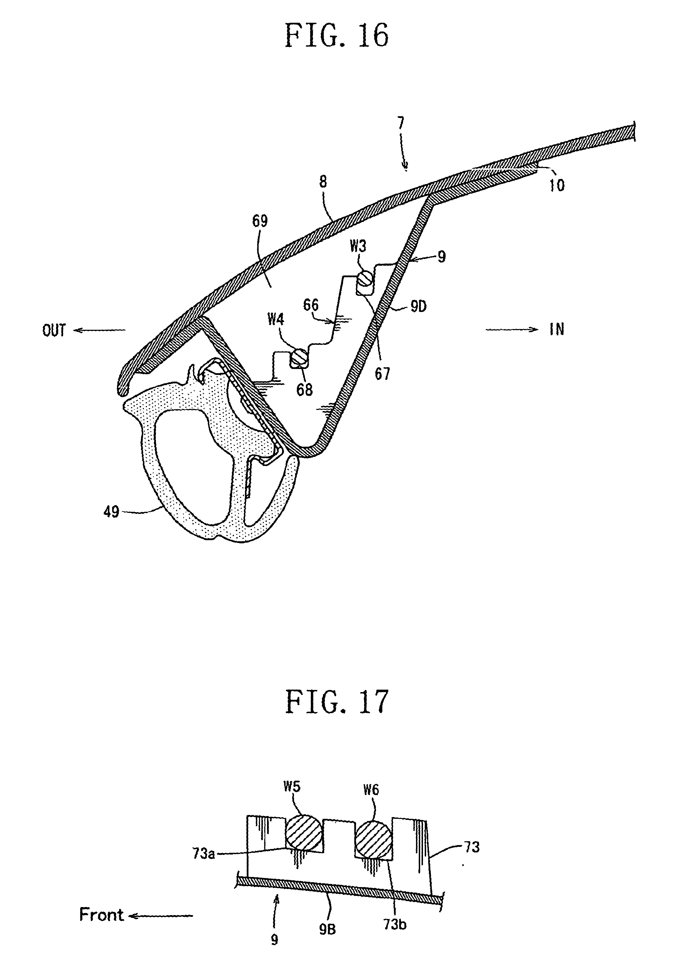

At each of the flank side parts **9D,** two ribs **66** are integrally protrude from the inner panel **9** between the reinforcements **32** and **47.** Each of the ribs **66** has an upper recess **67** and a lower recess **68** as shown in FIG. **16****.**

The wires **W3** above the wires **W4** are supported by the upper recesses **67** of the ribs **66,** while the wires **W4** below the wires **W3** are supported by the lower recesses **68** of the ribs **66.**

Specifically, in space **69** formed between the panels **8** and **9** (see FIG. **16****),** the wires **W3** and **W4** are hooked on the recesses **67** and **68** of the ribs **66.** As a result, the wires **W3** and **W4** are supported with a possible tension applied thereto. Therefore, other parts of the wires **W3** and **W4** than the fixed ends are free from contact with the panels **8** and **9.**

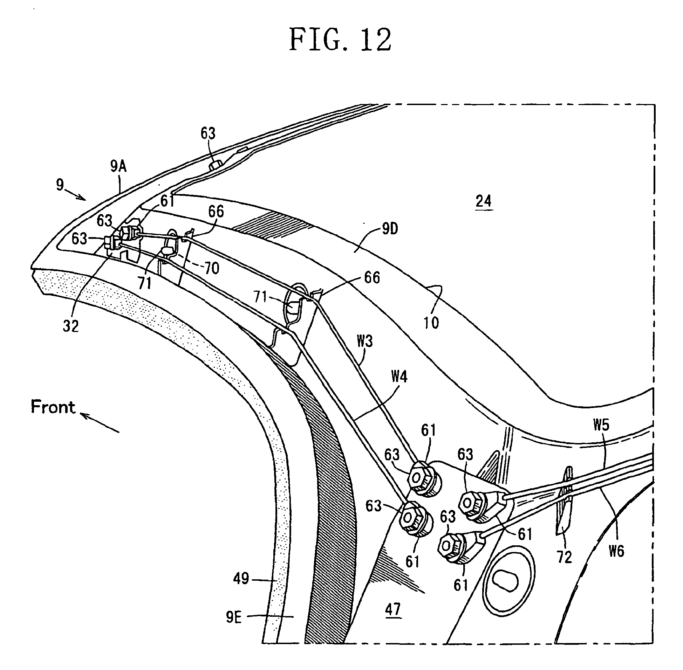

As shown in FIG. **12****,** the upper and lower recesses **67** and **68** change the direction of extension of the wires **W3** and **W4** three-dimensionally along the shape of the hard roof 7. Parts of the upper and lower wires **W3** and **W4** between the front rib **66** and the reinforcement **32** are arranged nonparallel to each other, and so are parts of the wires **W3** and **W4** between the rear rib **66** and the reinforcement **47.**

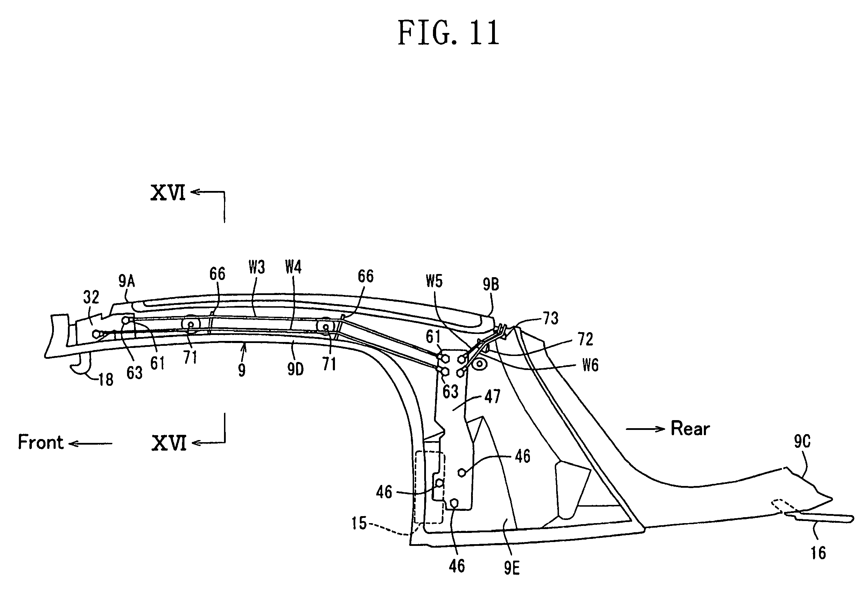

The ribs **66** are formed near trim mounting holes 70 formed in the inner panel **9** as shown in FIGS. **11** and **12****.**

Mounting bosses of the trim **24** protrude from the cabin side of the inner panel **9** to the outside through the trim mounting holes **70.** The trim **24** is fixed to the inner panel **9** by fitting fasteners **71** on the bosses. As shown in FIGS. **11** and **12****,** the fasteners **71** are positioned between the upper and lower wires **W3** and **W4** and do not contact with any of the wires **W3** and **W4.**

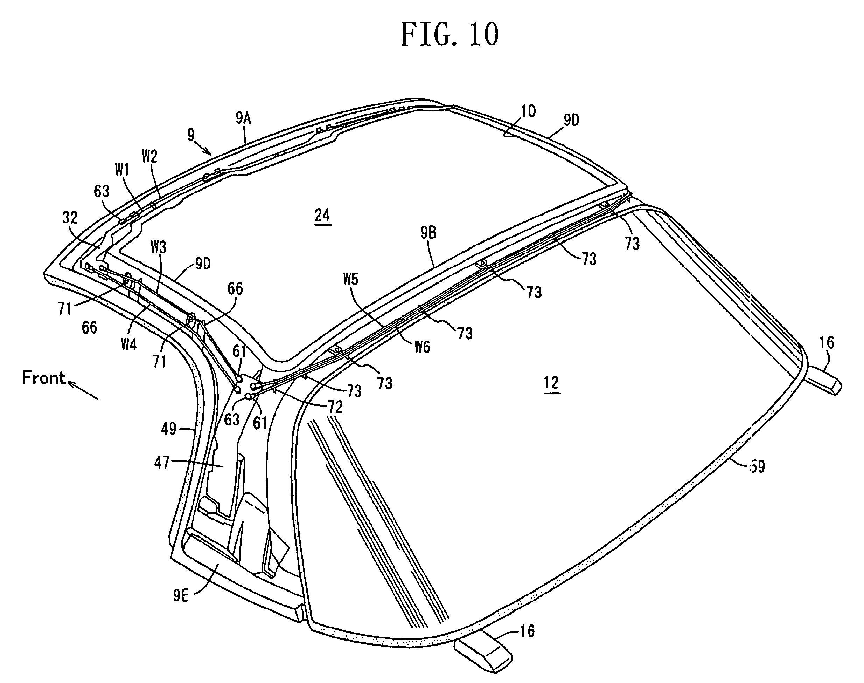

As shown in FIGS. **10** and **12****,** the wires **W5** and **W6** are arranged along the rear side part **9B** between the left and right reinforcements **47** while ones of the ends thereof are fixed to the left reinforcements **47** and the others are fixed to the right reinforcements **47.**

Two or more integral ribs **72** are formed at the top of the vertical side parts **9E** and two or more integral ribs **73** are formed at the rear side part **9B.** Each of the ribs **72** and **73** is provided with two recesses **73a** and **73b** for supporting the wires **W5** and **W6** separately (see FIG. **17****).**

The wires **W5** above the wires **W6** are supported by the recesses **73a,** while the wires **W6** below the wires **W5** are supported by the recesses **73b.**

The wires **W5** and **W6** are supported by the ribs **72** and **73** in the space formed between the panels **8** and **9** with a possible tension applied thereto such that other parts of the wires **W5** and **W6** than the fixed ends do not contact any of the panels **8** and **9.**

Thus, even if the hard roof 7 is broken under a large load in a collision, the hard roof 7 is prevented from being disassembled or scattered in pieces because the wires **W1** to **W6** are arranged within the hard roof 7. Further, since the wires **W1** to **W6** are spaced from the panels **8** and **9** by the ribs **64, 66, 72** and **73,** the occurrence of unusual sounds caused between the inner or outer panels **8** or **9** and the wires **W1** to **W6** is prevented in a normal driving mode.

The mounting parts (top lock **13,** wedges **14,** side locks **15** and rear deck locks **16)** are connected via the wires **W1** to **W6.** Therefore, when a large load is applied to the hard roof **7** in a collision, the load transferred from the vehicle body to the mounting parts is dispersed among the mounting parts. Even if a portion of the hard roof **7** close to any of the mounting parts is broken, the scattering of the hard roof **7** is prevented because the mounting part is connected to the other mounting parts via the wires **W1** to **W6.**

The wedges **14** arranged at the widthwise ends of the hard roof 7 are connected to each other in the vehicle width direction through the wires **W1** and **W2** and the reinforcements **23** and **32.** Further, the side locks **15** arranged at the widthwise ends of the hard roof **7** are connected to each other in the vehicle width direction through the wires **W5** and **W6** and the reinforcements **47.** Therefore, when a large load is applied to any one of the wedges **14** or any one of the side locks **15** in a side or offset collision, the load is dispersed effectively.

The wedges **14** and the side locks **15** arranged to be spaced from each other in the longitudinal direction of the vehicle body are connected through the wires **W3** and **W4** and the reinforcements **32** and **47.** Therefore, when a large load is applied to the wedges **14** or the side locks **15** in a frontal or rear collision, the load is dispersed effectively.

The wedges **14** and the side locks **15** attached to the hard roof 7 at different heights are connected to each other through the wires **W3** and **W4** and the reinforcements **32** and **47.** Therefore, when a large load is applied to the wedges **14** or the side locks **15** in a collision, the load is dispersed effectively.

The ends of the wires **W1** to **W6** are connected to the top lock **13,** wedges **14** and side locks **15** through the reinforcements **23, 32** and **47.** Therefore, a load applied to the wires **W1** to **W6** are transferred to the vehicle body via the reinforcements **23, 32** and **47** and the mounting parts.

Further, with use of the reinforcements **23, 32** and **47,** the mounting parts are attached to the hard roof 7 with improved firmness.

Moreover, the wires **W1** to **W6** and the mounting parts are connected easily in the manufacture of the hard roof 7.

The linear reinforcement **W** is arranged along the side parts **9A, 9B** and **9D** to be substantially in the form of a closed loop. With this structure, when a load is applied to the vehicle body in a frontal, side, rear or off-set collision, the load is effectively dispersed and the roof is prevented from being scattered in pieces.

The closed loop is formed of the wires **W1** to **W6.** Both ends of each of the wires **W1** to **W6** are fixed with bolt and nut pairs **63,** respectively. As the number of the bolt and nut pairs **63** fixing the linear reinforcement increases, the applied load is easily dispersed. Therefore, the hard roof 7 improves in resistance against the impact load.

Further, since the linear reinforcement **W** has a twinned structure including the upper wires **W1**, **W3,** and **W5** and the lower wires **W2, W4** and **W6,** the hard roof further improves in resistance against the impact load.

Moreover, since the wires **W1** to **W6** are connected together via the reinforcements **23, 32** and **47,** the wires **W1** to **W6** improves in load transfer among the wires **W1** to **W6.**

The wires **W1** to **W6** are supported by the recesses **64a, 67, 68, 73a** and **73b** formed in the ribs **64, 66, 72** and **73.** Therefore, the wires **W1** to **W6** are surely prevented from coming off the ribs **64, 66, 72** and **73** due to vibrations of the running vehicle. In particular, the hard roof **7** is formed by arranging the wires **W1** to **W6** and then bonding the outer and inner panels **8** and **9** in an undetachable manner. Therefore, it is excellently effective that the wires **W1** to **W6** do not come off the ribs.

The bolt and nut pairs **63** fixing the front ends of the wires **W3** and **W4** and those fixing the rear ends are positioned lower than the recesses **67** and **68** of the ribs **66.** Specifically, parts of the wires **W3** and **W4** between the ribs **66** and the fixed ends are skewed to each other (the two wires **W3** and **W4** are not parallel and do not intersect each other).

More specifically, the direction of extension of the wires **W3** and **W4** are three-dimensionally changed by the recesses **67** and **68,** thereby engaging the wires **W3** and **W4** suitably with the recesses **67** and **68.** Thus, the wires **W3** and **W4** are surely prevented from coming off the ribs **66.**

The ribs **66** are arranged near the trim mounting holes **70** formed in the inner panel 9. Therefore, the ribs **66** also serve as reinforcement for the trim mounting holes **70.** As a result, the rigidity of the hard roof 7 improves and the trim is attached with high firmness.

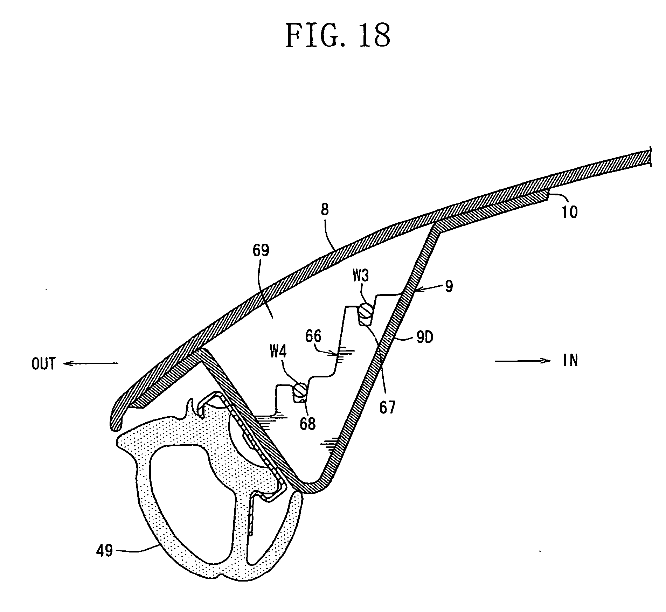

FIG. **18** illustrates another embodiment of the rib. Two recesses **67** and **68** of the rib are tapered downward. With this structure, the recesses **67** and **68** improve in holding the wires **W3** and **W4.** The thus configured ribs achieve the same effect as those of the above-described embodiment.

The arrangement of the linear reinforcement **W** is not particularly limited to the one described above and may be changed as required.

The present invention is not limited to the hard roof **7.** For example, the present invention may be applied to a vehicle panel as a component of the vehicle body such as a lift gate or a rear gate.

The present invention is not limited to the embodiments described herein and variations may be made without departing from the major features of the present invention. In every respect, the embodiments described herein are to be regarded as illustrative rather than restrictive. The scope of the present invention is defined by the claims and is not restricted by the description of the specification. Further, it is expressly intended that all such variations, changes and equivalents which fall within the scope of the present invention as defined in the claims, be embraced thereby.

## Claims

1. A vehicle panel comprising:
a panel (7) prepared by bonding an outer panel (8) and an inner panel (9); and a linear reinforcement (W) arranged between the outer panel (8) and the inner panel (9),
**characterized in that**
the outer panel (8) or the inner panel (9) includes two or more fixing parts (63) for fixing the linear reinforcement (W) and at least one projection (64, 66, 72, 73) provided between the fixing parts (63) and
the linear reinforcement (W) is in the form of a wire and is supported by the projection (64, 66, 72, 73) between the fixing parts (63) to be spaced from the outer and inner panels (8, 9) while tension is applied to the linear reinforcement (W).

2. The vehicle panel according to claim 1, wherein
the panel (7) includes two or more mounting parts (13, 14, 15, 16) and is detachably attached to a vehicle body with the mounting parts (13, 14, 15, 16) and
the linear reinforcement (W) connects the mounting parts (13, 14, 15) together.

3. The vehicle panel according to claim 2, wherein
the linear reinforcement (W) connects the mounting parts (14, 15) which are arranged at both ends of the panel (7) in the vehicle width direction.

4. The vehicle panel according to claim 2 or 3, wherein
the linear reinforcement (W) connects the mounting parts (14, 15) which are arranged to be spaced from each other in the longitudinal direction of the vehicle body.

5. The vehicle panel according to any one of claims 2 to 4, wherein
the linear reinforcement (W) connects the mounting parts (14, 15) which are arranged at different heights.

6. The vehicle panel according to any one of claims 2 to 5, wherein
the linear reinforcement (W) is connected to the mounting parts (13, 14, 15) via plate-like reinforcements (23, 32, 47).

7. A vehicle panel according to any one of claims 2 to 6, wherein
the linear reinforcement (W) is arranged along almost the entire circumference of the panel (7).

8. The vehicle panel according to any one of claims 2 to 7, wherein
the linear reinforcement (W) includes an upper linear reinforcement (W1, W3, W5) and a lower linear reinforcement (W2, W4, W6).

9. The vehicle panel according to claim 1, wherein
the linear reinforcement (W) is substantially in the form of a closed loop and arranged along at least part of the circumference of the panel (7).

10. The vehicle panel according to claim 9, wherein
the linear reinforcement (W) is divided into two or more line segments (W1, W2, W3, W4, W5, W6) and
both ends of each of the line segments (W1, W2, W3, W4, W5, W6) are fixed by the fixing parts (63).

11. The vehicle panel according to claim 10, wherein
the line segments (W1, W2, W3, W4, W5, W6) include upper line segments (W1, W3, W5) and lower line segments (W2, W4, W6).

12. The vehicle panel according to claim 10, wherein
the line segments (W1, W2, W3, W4, W5, W6) are connected together via the plate-like reinforcements (23, 32, 47) attached to the outer panel (8) or the inner panel (9).

13. The vehicle panel according to claim 1, wherein
the projection (64, 66, 72, 73) is provided with a recess (64a, 67, 68, 73a, 73b) for supporting the linear reinforcement (W).

14. The vehicle panel according to claim 13, wherein
the direction of extension of the linear reinforcement (W) is changed by the recess (64a, 67, 68, 73a, 73b).

15. The vehicle panel according to claim 13 or 14, wherein
the linear reinforcement (W) includes an upper linear reinforcement (W3) and a lower linear reinforcement (W4),
the projection (66) is provided with two recesses (67, 68) corresponding to the upper and lower linear reinforcements (W3, W4) and
the upper and lower linear reinforcements (W3, W4) are arranged such that parts thereof between the projection (66) and the fixing part (63) are not parallel to each other.

16. The vehicle panel according to any one of preceding claims, wherein
the projection (66) is arranged near an opening (70) formed in the outer panel (8) or the inner panel (9).

17. The vehicle panel according to any one of preceding claims, wherein the panel (7) is a roof detachable from the vehicle body.

## Patentansprüche

1. Fahrzeugpaneel, das Folgendes umfasst:
ein durch Verkleben eines äußeren Paneels (8) und eines inneren Paneels (9) hergestelltes Paneel (7); und eine zwischen dem äußeren Paneel (8) und dem inneren Paneel (9) angeordnete lineare Verstärkung (W),
**dadurch gekennzeichnet, dass**
das äußere Paneel (8) oder das innere Paneel (9) zwei oder mehr Befestigungsteile (63) zum Befestigen der linearen Verstärkung (W) und mindestens einen zwischen den Befestigungsteilen (63) vorgesehenen Vorsprung (64, 66, 72, 73) aufweist, und
die lineare Verstärkung (W) in Form eines Drahtes vorliegt und auf dem Vorsprung (64, 66, 72, 73) zwischen den Befestigungsteilen (63) gelagert ist, um von dem äußeren und dem inneren Paneel (8, 9) beabstandet zu sein, während die lineare Verstärkung (W) mit Zug beaufschlagt wird.

2. Fahrzeugpaneel nach Anspruch 1, wobei
das Paneel (7) zwei oder mehr Befestigungsteile (13, 14, 15, 16) aufweist und mit den Befestigungsteilen (13, 14, 15, 16) abnehmbar an einer Fahrzeugkarosserie befestigt ist, und
die lineare Verstärkung (W) die Befestigungsteile (13, 14, 15) miteinander verbindet.

3. Fahrzeugpaneel nach Anspruch 2, wobei
die lineare Verstärkung (W) die Befestigungsteile (14, 15) verbindet, die an beiden Enden des Paneels (7) in Breitenrichtung des Fahrzeugs angeordnet sind.

4. Fahrzeugpaneel nach Anspruch 2 oder 3, wobei
die lineare Verstärkung (W) die Befestigungsteile (14, 15) verbindet, die in Längsrichtung der Fahrzeugkarosserie im Abstand voneinander angeordnet sind.

5. Fahrzeugpaneel nach einem der Ansprüche 2 bis 4, wobei
die lineare Verstärkung (W) die Befestigungsteile (14, 15) verbindet, die in verschiedenen Höhen angeordnet sind.

6. Fahrzeugpaneel nach einem der Ansprüche 2 bis 5, wobei
die lineare Verstärkung (W) über plattenartige Verstärkungen (23, 32, 47) mit den Befestigungsteilen (13, 14, 15) verbunden ist.

7. Fahrzeugpaneel nach einem der Ansprüche 2 bis 6, wobei
die lineare Verstärkung (W) entlang fast des gesamten Umfangs des Paneels (7) angeordnet ist.

8. Fahrzeugpaneel nach einem der Ansprüche 2 bis 7, wobei
die lineare Verstärkung (W) eine obere lineare Verstärkung (W1, W3, W5) und eine untere lineare Verstärkung (W2, W4, W6) umfasst.

9. Fahrzeugpaneel nach Anspruch 1, wobei
die lineare Verstärkung (W) im Wesentlichen in Form einer geschlossenen Schlinge vorliegt und entlang mindestens eines Teils des Umfangs des Paneels (7) angeordnet ist.

10. Fahrzeugpaneel nach Anspruch 9, wobei
die lineare Verstärkung (W) in zwei oder mehr Leitungsabschnitte (W1, W2, W3, W4, W5, W6) unterteilt ist, und
beide Enden der jeweiligen Leitungsabschnitte (W1, W2, W3, W4, W5, W6) durch die Befestigungsteile (63) befestigt sind.

11. Fahrzeugpaneel nach Anspruch 10, wobei
die Leitungsabschnitte (W1, W2, W3, W4, W5, W6) obere Leitungsabschnitte (W1, W3, W5) und untere Leitungsabschnitte (W2, W4, W6) umfassen.

12. Fahrzeugpaneel nach Anspruch 10, wobei
die Leitungsabschnitte (W1, W2, W3, W4, W5, W6) über die an dem äußeren Paneel (8) oder dem inneren Paneel (9) befestigten plattenartigen Verstärkungen (23, 32, 47) miteinander verbunden sind.

13. Fahrzeugpaneel nach Anspruch 1, wobei
der Vorsprung (64, 66, 72, 73) mit einer Ausnehmung (64a, 67, 68, 73a, 73b) zum Tragen der linearen Verstärkung (W) versehen ist.

14. Fahrzeugpaneel nach Anspruch 13, wobei
die Erstreckungsrichtung der linearen Verstärkung (W) durch die Ausnehmung (64a, 67, 68, 73a, 73b) geändert wird.

15. Fahrzeugpaneel nach Anspruch 13 oder 14, wobei
die lineare Verstärkung (W) eine obere lineare Verstärkung (W3) und eine untere lineare Verstärkung (W4) umfasst,
der Vorsprung (66) mit zwei Ausnehmungen (67, 68) versehen ist, die der oberen und unteren linearen Verstärkung (W3, W4) entsprechen, und
die obere und untere lineare Verstärkung (W3, W4) so angeordnet sind, dass Teile derselben zwischen dem Vorsprung (66) und dem Befestigungsteil (63) nicht parallel zueinander sind.

16. Fahrzeugpaneel nach einem der vorhergehenden Ansprüche, wobei
der Vorsprung (66) in der Nähe einer im äußeren Paneel (8) oder im inneren Paneel (9) gebildeten Öffnung (70) angeordnet ist.

17. Fahrzeugpaneel nach einem der vorhergehenden Ansprüche, wobei
das Paneel (7) ein von der Fahrzeugkarosserie abnehmbares Dach ist.

## Revendications

1. Un panneau de véhicule comprenant :
un panneau (7) préparé en liant un panneau extérieur (8) et un panneau intérieur (9); et un renforcement linéaire (W) disposé entre le panneau extérieur (8) et le panneau intérieur (9), **caractérisé en ce que**
le panneau extérieur (8) ou le panneau intérieur (9) inclut deux parties de fixation (63) ou plus pour accrocher le renforcement linéaire (W) et au moins une projection (64, 66, 72, 73) fournie entre les parties de fixation (63) et
le renforcement linéaire (W) est en forme de câble et est soutenu par la projection (64, 66, 72, 73) entre les parties de fixation (63) pour être espacé des panneaux extérieurs et intérieurs (8, 9) pendant que la tension est appliquée eu renforcement linéaire (W).

2. Le panneau de véhicule selon la revendication 1, dans laquelle le panneau (7) inclut deux parties de support (13, 14, 15, 16) ou plus et est attaché de manière amovible au corps d'un véhicule avec les parties de support (13, 14, 15, 16) et le renforcement linéaire (W) connecte les parties de support (13, 14, 15) ensemble.

3. Le panneau de véhicule selon la revendication 2, dans laquelle le renforcement linéaire (W) connecte les parties de support (14, 15) qui sont disposées à chaque extrémité du panneau (7) dans le sens de la largeur du véhicule.

4. Le panneau de véhicule selon la revendication 2 ou 3, dans laquelle le renforcement linéaire (W) connecte les parties de support (14, 15) qui sont disposées pour être espacées l'une de l'autre dans le sens de la direction longitudinale du corps du véhicule.

5. Le panneau de véhicule selon l'une quelconque des revendications de 2 à 4, dans lesquelles le renforcement linéaire (W) connecte les parties de support (14, 15) qui sont disposées à différents hauteurs.

6. Le panneau de véhicule selon l'une quelconque des revendications de 2 à 5, dans lesquelles le renforcement linéaire (W) est connecté aux parties de support (13, 14, 15) via les renforcements semblables à des plaques (23, 32, 47).

7. Un panneau de véhicule selon l'une quelconque des revendications de 2 à 6, dans lesquelles le renforcement linéaire (W) est disposé le long de la quasi-totalité de la circonférence du panneau (7).

8. Le panneau de véhicule selon l'une quelconque des revendications de 2 à 7, dans lesquelles le renforcement linéaire (W) inclut un renforcement linéaire supérieur (W1, W3, W5) et un renforcement linéaire inférieur (W2, W4, W6).

9. Le panneau de véhicule selon la revendication 1, dans laquelle le renforcement linéaire (W) est substantiellement en forme de boucle fermée et disposé le long d'une partie de la circonférence du panneau (7).

10. Le panneau de véhicule selon la revendication 9, dans laquelle le renforcement linéaire (W) est divisé en deux segment de lignes ou plus (W1, W2, W3, W4, W5, W6) et les deux extrémités des segments de ligne (W1, W2, W3, W4, W5, W6) sont accrochées par les parties de fixation (63).

11. Le panneau de véhicule selon la revendication 10, dans laquelle les segments de ligne (W1, W2, W3, W4, W5, W6) incluent les segments de ligne supérieurs (W1, W3, W5) et les segments de ligne inférieurs (W2, W4, W6).

12. Le panneau de véhicule selon la revendication 10, dans laquelle les segments de ligne (W1, W2, W3, W4, W5, W6) sont connectés ensemble via les renforcements semblables à des plaques (23, 32, 47), attachés au panneau extérieur (8) ou au panneau intérieur (9).

13. Le panneau de véhicule selon la revendication 1, dans laquelle la projection (64, 66, 72, 73) est fournie avec un chambrage (64a, 67, 68, 73a, 73b) pour soutenir le renforcement linéaire (W).

14. Le panneau de véhicule selon la revendication 13, dans laquelle la direction de l'extension du renforcement linéaire (W) est changée par le chambrage (64a, 67, 68, 73a, 73b).

15. Le panneau de véhicule selon la revendication 13 ou 14, dans laquelle le renforcement linéaire (W) inclut un renforcement linéaire supérieur (W3) et un renforcement linéaire inférieur (W4),
la projection (66) est fournie avec deux chambrages (67, 68) correspondant aux renforcements supérieurs et inférieurs (W3, W4) et
les renforcements supérieurs et inférieurs (W3, W4) sont disposés de telle manière que les parties de ceux-ci entre la projection (66) et la partie de fixation (63) ne soient pas parallèles.

16. Le panneau de véhicule selon l'une quelconque des revendications précédentes, dans lesquelles la projection (66) est disposée près d'une ouverture (70) formée dans le panneau extérieur (8) ou le panneau intérieur (9).

17. Le panneau de véhicule selon l'une quelconque des revendications précédentes, dans lesquelles le panneau (7) est un toit amovible du corps du véhicule.
